# EUROPEAN PATENT SPECIFICATION

(11) **EP 0 492 550 B1**
(45) Date of publication and mention of the grant of the patent: **03.04.1996**
(21) Application number: 91122024.2
(22) Date of filing: 20.12.1991
(51) Int. Cl.: C08L 55/02, C08L 69/00, C08L 51/04, C08K 5/10

(54) **Thermoplastic compositions having improved mould release characteristics**
Thermoplastische Zusammensetzungen mit verbesserten Entformungseigenschaften
Compositions thermoplastique ayant des propriétés de démoulage améliorées

(30) Priority: 21.12.1990 IT 2250190; 25.11.1991 IT MI913142
(43) Date of publication of application: 01.07.1992
(73) Proprietor: ENICHEM S.p.A., I-20124 Milano (IT)
(72) Inventor: Fasulo, Gian Claudio, Dr., I-46010 San Silvestro, Mantova (IT); Mori, Francesco, Dr., I-37122 Verona (IT); Ghidoni, Dario, Dr., I-46020 Gonzaga, Mantova (IT)
(74) Representative: Barz, Peter, Dr.

(56) References cited:
- EP-A- 0 232 838
- EP-A- 0 437 707
- FR-A- 2 379 571
- US-A- 4 299 885
- WORLD PATENTS INDEX LATEST Week 8817, Derwent Publications Ltd., London, GB; AN 88-116666

## Description

The present invention relates to thermoplastic moulding compositions having improved mould release characteristics and, additionally, improved physico-mechanical properties at high moulding temperatures.

Moulding compositions comprising an impact resistant vinyl-aromatic copolymer (A) of ethylenically unsaturated nitrile, vinyl-aromatic monomer and rubber and an engineering polymer (B), such as, for example, polycarbonate, are known from Italian Patent No. 1,000,431 and US-A-4,526,926; 4,624,986 and 4,906,689.

Also known are moulding compositions comprising a copolymer (A) of the above type, an engineering polymer (B) and a graft copolymer (E) comprising an elastomeric core having a second order glass transition temperature (Tg) lower than 10°C and containing vinyl monomer chains grafted thereon.

These compositions are disclosed in EP-A-216065 and 379039 and are employed in numerous technical fields of application because of their optimum combination of mechanical, chemico-physical and thermal properties.

A disadvantage of these known compositions is their poor mould release when injection-moulded. This disadvantage, as known, mainly results in the breakage of the moulded article during the extraction phase.

A known way of avoiding this disadvantage is to carry out the release at high temperatures. This procedure, however, is not without disadvantages, mainly due to the sticking of the moulded articles onto the mould surface and resulting deformation or breakage of the articles.

In order to facilitate the release of the moulded articles from the mould, a conventional technique is to use mould release agents.

Very often, however, these additives have adverse effects on the properties of the thermoplastic composition. For example, bis(stearyl-/palmitoyl-)ethylene diamine (which is generally used in ABS resins) improves the flowability of the resin and thereby its processability, but it also reduces drastically its heat distortion stability (VICAT). In the case of the compositions on which the present invention is based, the impairment of the mechanical properties under heat is an important drawback, which drastically reduces the application field of said compositions.

Mould release agents composed of long-chain aliphatic carboxylic acid esters of monohydric and trihydric alcohols are also known.

Also these compounds, however, adversely affect the mechanical properties on prolonged heating. Moreover, these compounds are volatile at the moulding temperature of the composition, which is a serious disadvantage during processing.

EP-A-248 308 discloses thermoplastic molding compositions comprising polycarbonate, graft copolymers, optionally copolymers, and esters of saturated aliphatic C₁₀₋₂₂ carboxylic acids and trihydric alcohols such as glycerol, trimethylolpropane and hexanetriol and optionally other mould release agents and/or other conventional additives.

The present invention allows to overcome all the above disadvantages and provides thermoplastic moulding compositions which show mould release characteristics which are adequate for all technical applications and also show a combination of mechanical, physical and thermal properties which are comparable to those of the compositions which do not contain any mould release agents.

According to the present invention, thermoplastic compositions having the above described characteristics can be obtained by using, as release agent, an effective amount of a synergistic mixture of two esters, one of which is a glycerol ester of a fatty acid containing from 16 to 18 carbon atoms and the other is an ester of a tetrahydric to hexahydric aliphatic alcohol with a saturated, aliphatic monocarboxylic acid containing from 10 to 20 carbon atoms or with a mixture of the above monocarboxylic acid and a polycarboxylic acid containing from 10 to 20 carbon atoms.

Accordingly, the present invention provides a thermoplastic moulding composition comprising as essential components:
(A) impact resistant vinyl-aromatic copolymer containing ethylenically unsaturated nitrile, vinyl-aromatic monomer and rubber;
(B) engineering polymer;
(C) a release agent composed of a mixture comprising:
   (i) at least one glycerol ester of a C₁₆-C₁₈ fatty acid and
   (ii) at least one ester of a saturated, aliphatic, monocarboxylic acid containing from 10 to 20 carbon atoms, or a mixture of said monocarboxylic acid and a polycarboxylic acid (e.g. dicarboxylic acid) containing from 10 to 20 carbon atoms, with an aliphatic alcohol containing from 4 to 6 hydroxy groups.
When the compositions of the present invention are used in the injection moulding of articles of very complex shapes, as far as the dimensions and the criticality of the filling fluxes are concerned, very high temperatures of the mould, generally higher than 260°C, are required for achieving a complete filling of the mould. At such temperatures the physico-mechanical characteristics of the above compositions can decay to unacceptable levels in some instances.

According to a further aspect of the present invention, the addition of an effective amount of at least one bis(alkylphenyl)pentaerythritol diphosphite (D) allows to broaden the temperature range within which the components (A) and (B) can be moulded and to use mould temperatures higher than 260°C without any substantial decay of the initial mechanical, physical and thermal properties. The bis(alkyl-phenyl)pentaerythritol diphosphate (D) can be added in an amount of from 0 to 3 parts, particularly 0.01 to 3 parts and preferably 0.05 to 1 part by weight per 100 parts by weight of components (A) + (B).

The compositions of components (A), (B) and (C) and, optionally, (D) of the present invention can further contain a graft copolymer (E) comprising an elastomeric core having a second order glass transition temperature (Tg) below 10°C and containing vinyl monomer chains grafted thereon, when particular mechanical properties, especially in the welding zone of the injection fluxes, are required.

With respect to 100 parts by weight of components (A) + (B), the release agent (C) is usually added in an amount of from 0.01 to 3, preferably from 0.5 to 2 parts by weight.

In the synergistic mixture (C), the ratio of the two esters (i) and (ii) can vary within a wide range; particularly advantageous results have been achieved with weight ratios of from 4:1 to 1:4, and particularly around 1:1.

Preferably the glycerol esters (i) of C₁₆-C₁₈ fatty acids are highly biodegradable products of non-ionic, polar nature which have the following properties:
. Saponification number 155 - 175
. Iodine number 1 - 2
. Monoester content 40 - 99% by weight
. Melting point 55 - 65°C
. Free glycerol 1 - 6% by weight
. Water content 0.1 - 0.5 by weight.

These esters are well known on the market under the trade marks SOFTENOL® (HÜLS TROISDORF AG, Germany); LANKROPLAST® (LANKRO ITALIANA S.p.A.); and LOXIOL® (HENKEL, Germany).

Said esters (i) have been proposed as sliding, antistatic, mould release and anti-blocking agents for many plastic materials such as polystyrene, acrylonitrile-butadiene-styrene (ABS), polyethylene, polycarbonate, polypropylene and polyvinyl chloride; tests carried out by the applicant have, however, shown that their mould release effect is very limited where thermoplastic compositions comprising components (A) and (B) are used.

As alcohols for preparing the esters (ii) of the synergistic mixture (C) of the present invention there can be used, e.g.:
(1) alcohols having 4 OH-groups and from 4 to 16, preferably from 4 to 8 carbon atoms;
(2) alcohols having 5 OH-groups and from 5 to 18, preferably from 5 to 10 carbon atoms;
(3) alcohols having 6 OH-groups and from 6 to 18, preferably from 6 to 12 carbon atoms.

The esters (ii) are preferably those which result from the complete esterification or the alcohols with one or more of the C₁₀-C₂₀ (mono- and optionally poly-) carboxylic acids.

Specific examples of suitable alcohols containing from 4 to 6 OH-groups are:
erythritol, arabitol, adonitol, manitol and dulcitol and especially mesoerythritol, xylitol, sorbitol and pentaerythritol.

For the preparation of esters (ii) any C₁₀-C₂₀ aliphatic saturated monocarboxylic acid can be used, optionally together with a C₁₀-C₂₀ polycarboxylic acid, such as, for example, capric acid, undecanoic acid, lauric acid, tridecanoic acid, myristic acid, pentadecanoic acid, palmitic acid, margaric acid, stearic acid, nonadecanoic acid, eicosanoic acid, sebacic acid, undecanedioic acid, dodecanedioic acid, brassylic acid and thapsic acid.

Specific examples of esters (ii) which may be employed in component (C) are:
pentaerythritol tetrastearate, pentaerythritol tetrapalmitate, pentaerythritol tetramyristate, pentaerythritol tetralaurate, mesoerythritol tetralaurate, mesoerythritol tetrastearate, mesoerythritol tetramyristate, mesoerythritol tetraeicosanate, xylitol pentastearate, xylitol pentapalmitate, arabitol pentastearate, arabitol pentapalmitate, sorbitol hexastearate, sorbitol hexapalmitate, dulcitol hexapalmitate, mannitol hexastearate and mannitol hexamyristate.

Preferred esters are those of stearic acid and/or palmitic acid.

The esters (ii) may be prepared according to known processes such as, for example, the processes described in "Houben-Weyl Methoden der Organischen Chemie", Georg Thieme Verlag, Stuttgart, 1952, 4th Edition, Vol. VIII, page 516 et seq.

Esters (ii) are also known on the market under the trade mark LOXIOL® (HENKEL, Germany).

DE-A-25 07 748; 27 01 725 and 27 29 485 disclose the use of these esters (ii) as release agents for high molecular weight aromatic polycarbonates.

Tests carried out by the applicant have, however, shown that their release effect is very poor when thermoplastic compositions comprising the above components (A) and (B) are employed.

Preferably the bis(alkyl-phenyl)pentaerythritol diphosphites (D), which may be used in the thermoplastic composition of the present invention correspond to the general formula (I): 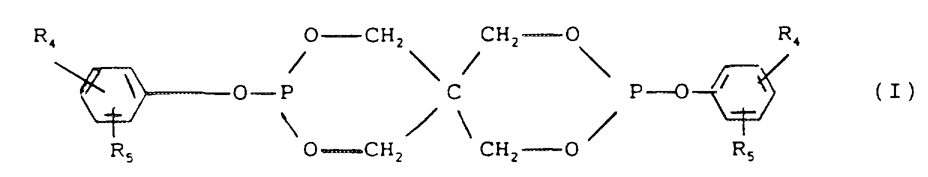 wherein R₄ and R₅, which can be the same or different from each other, are alkyl radicals containing from 1 to 10 (preferably 1 to 6) carbon atoms.

The above compounds and their preparation are well known in the literature and disclosed, e.g., in US-A-3,281,381; 3,310,609; 3,192,243 and 3,205,269.

The preferred bis(alkyl-phenyl)pentaerythritol diphosphites are those of general formula (II): 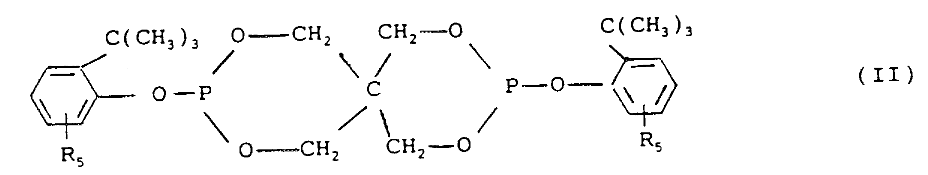 wherein R₅ is an alkyl radical containing from 1 to 6 (particularly 1 to 4) carbon atoms.

A particularly preferred compound is bis(2,4-di-tert-butylphenyl) pentaerythritol known on the market under the trade name ULTRANOX® 626 (General Electric).

The vinyl-aromatic copolymer (A) may comprise, e.g.:
(A.1)an impact resistant vinyl-aromatic copolymer containing from 2 to 35% by weight of ethylenically unsaturated nitrile, dienic rubber in an amount not higher than 20% by weight and vinyl-aromatic monomer;
(A.2) an impact resistant vinyl-aromatic copolymer containing from 2 to 35% by weight of ethylenically unsaturated nitrile, from 5 to 50% by weight of olefinic elastomer and from 93 to 15% by weight of vinyl-aromatic monomer; the sum of these monomers being equal to 100.

Preferably, the impact-resistant styrene polymer (A.2) comprises from 2 to 35% by weight of ethylenically unsaturated nitrile, from 15 to 30% by weight of olefinic elastomer and from 35 to 83% by weight of vinyl-aromatic monomer.

The term vinyl-aromatic monomer, whenever used in the present specification and in the claims, comprises ethylenically unsaturated compounds of general formula (III): 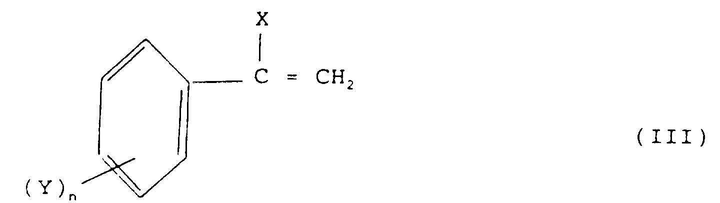 wherein:
- X: is hydrogen or an alkyl radical having 1 to 4 carbon atoms (e.g. methyl or ethyl);
- n: is 0 or an integer from 1 to 5 and
- Y: is a halogen (e.g. Cl, F or Br) or an alkyl radical having 1 to 4 carbon atoms (e.g. methyl or ethyl).

Specific examples of vinyl-aromatic monomers of general formula (III) are styrene; methyl-styrene; mono-, di-, tri-, tetra-and penta-chloro-styrene and the corresponding alpha-methyl-styrenes; nucleus-alkylated styrenes and the corresponding alpha-methyl-styrenes such as ortho- and para-methyl-styrenes; ortho- and para-ethyl-styrenes; ortho- and para-methyl-alphamethyl styrenes.

These monomers can be used individually or in combination of at least two of them and/or together with other copolymerizable comonomers such as, for example, maleic anhydride. Styrene is a particularly preferred vinyl-aromatic monomer.

The term "ethylenically unsaturated nitrile" is to denote, above all and preferably, acrylonitrile; examples of other suitable ethylenically unsaturated nitriles (nitrile-like compounds) are methacrylonitrile, acrylic acid, methacrylic acid and C₁-C₆ alkyl esters thereof.

Specific examples of dienic rubbers used in copolymer (A.1) are polybutadiene, polyisoprene and the copolymers of butadiene and/or isoprene with styrene or with other monomers; polybutadiene is the preferred dienic rubber.

The content of said dienic rubber in the impact resistant vinyl-aromatic copolymer is usually not higher than 20% by weight and preferably ranges from 2 to 15% by weight.

In the impact resistant vinyl-aromatic copolymer (A.2), the elastomeric olefinic component, which is the substrate onto which the ethylenically unsaturated nitrile and the vinyl-aromatic monomer are in part grafted and in part mechanically adhered to in the form of an ethylenically unsaturated nitrile-vinyl-aromatic monomer copolymer, preferably is a rubber-like copolymer, having a Mooney viscosity (ML-4) of from 10 to 150 at 100°C, of at least two different straight chain alpha-monoolefins such as ethylene, propylene, butene-1 and octene-1 with at least one other copolymerizable monomer, generally a polyene and typically a non-conjugated diene. Pre-ferably one of the alpha-monoolefins is ethylene. The weight ratio of ethylene to the other alpha-monoolefin(s) in the rubber-like copolymer is usually in the range of from 20/80 to 80/20. Particularly preferred copolymers are the ethylene-propylene-non-conjugated diene (triene) terpolymers wherein the non-conjugated diene (triene) may be cyclic or acyclic, such as 5-methylene-2-norbornene; 5-ethylidene-2-norbornene; 5-isopropylene-2-norbornene; pentadiene-1,4; hexadiene-1,4; hexadiene-1,5; heptadiene-1,5; dodecatriene-1,7,9; methyl-heptadiene-1,5; norbornadiene-2,5; cyclooctadiene-1,5; dicyclopentadiene; tetrahydroindene; 5-methyl-tetrahydroindene, etc. The diene (triene) content usually ranges from 5 to 20% by weight and preferably from 8 to 18% by weight.

A rubber-like ethylene-propylene-non-conjugated diene copolymer having a Mooney viscosity (ML-4), measured at 100°C, ranging from 30 to 90 and an iodine number higher than 5, preferably ranging from 10 to 40, is particularly preferred.

The impact resistant vinyl-aromatic copolymers (A.1) and (A.2) can be obtained according to any known polymerization process in suspension, bulk-suspension or continuous bulk, using the above mentioned compounds as starting monomers.

When the impact resistant vinyl-aromatic copolymer (A.1) is obtained according to an emulsion polymerization process, the amount of dienic rubber can also be higher than 20% and up to 65% by weight, with an ethylenically unsaturated nitrile content usually ranging from 2 to 35% by weight.

The engineering polymer (B) used in the composition of the present invention can be any plastic material having mechanical, chemical and thermal properties suitable for use as construction material.

A detailed description of the term "engineering polymer" can be found in "Engineered Materials Handbook" Vol. 2 - Engineering Plastics - ASM Intern., 1988.

Typical examples of suitable engineering polymers are polycarbonates, polyesters, thermoplastic polyurethanes, polymethacrylates, acrylates, styrene-methylmethacrylate copolymers, acrylic polymers, styrene-maleic anhydride copolymers and vinyl chloride polymers; aromatic polycarbonates are preferred.

The aromatic polycarbonate is preferably derived from a bisphenol of general formula (IV): 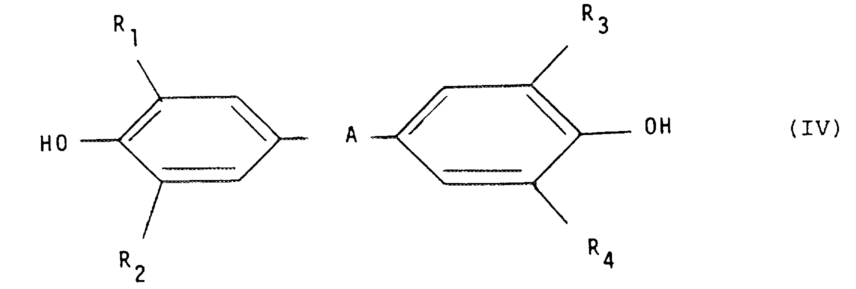 wherein R₁, R₂, R₃ and R₄ independently represent hydrogen, C₁-C₄ alkyl (e.g. ethyl or methyl) and halogen (e.g. Cl, F, Br, I) and A represents -O-, -CO-, -SO₂-, a C₂-C₁₀ (e.g. C₂-C₆) alkylene or alkylidene group, a C₅-C₁₅ (e.g. C₅-C₈) cycloalkylene or cycloalkylidene group or a group of formula (V):

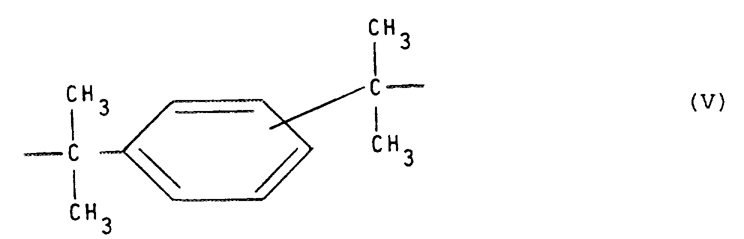

Particularly preferred bisphenols are, for example, 2,2-bis-(4-hydroxyphenyl)-propane; 2,2-bis-(3,5-dimethyl-4-hydroxyphenyl)propane; 2,2-bis-(3,5-dichloro-4-hydroxyphenyl)-propane; 2,2-bis-(3,5-dibromo-4-hydroxyphenyl)-propane and 1,1-bis-(4-hydroxyphenyl)-cyclohexane.

Particularly preferred polycarbonates are those based on one or more of the above bis-phenols. The polycarbonates based on 2,2-bis-(4-hydroxyphenyl)-propane and/or on 2,2-bis-(3,5-dimethyl-4-hydroxyphenyl)-propane, alone or in admixture with one or more of the other bisphenols mentioned above, are particularly preferred.

The aromatic polycarbonates usually have an average molecular weight of at least 10,000, particularly of from 10,000 to 200,000 and preferably of from 20,000 to 80,000, as determined by measuring the viscosity in CH₂Cl₂ at 25°C and at a concentration of 0.5% by weight.

The aromatic polycarbonates are well known in the art and are available on the market from several manufacturers, for example: General Electric Company (Pittsfield, Mass., USA), under the trade mark "LEXAN®"; ENIMONT (Milan), under the trade mark "SINVET®"; Proquigel (Brazil), under the trade mark "DUROLON®".

In the compositions of the present invention, the weight ratio of components (A) and (B) can vary within a wide range.

Generally, component (A) is present in amounts of from 10 to 90% by weight, preferably 20 to 80% by weight and particularly 20 to 60% by weight; and, correspondingly, component (B) ranges from 90 to 10% by weight, preferably 80 to 20% by weight, and particularly 80 to 40% by weight.

The compositions of the present invention can additionally comprise a graft copolymer (E) comprising an elastomeric core having a second order glass transition temperature lower than 10°C and containing vinyl monomer chains grafted thereon, especially when high mechanical characteristics in the joint points of the injection fluxes are required.

The amount of said graft copolymer (E) usually ranges from 0 to 30, preferably from 2 to 15 parts by weight per 100 parts by weight of the blend (A) + (B).

Said graft copolymer (E) is a polymer of the "core-shell" type comprising an elastomeric core containing, grafted thereon, chains of one or more vinyl monomers.

Preferably, the "core-shell" polymer comprises from 25 to 95% by weight of elastomeric core and from 75 to 5% by weight of vinyl monomer chains grafted thereon.

The elastomeric core has a second order glass transition temperature lower than 10°C and may comprise, e.g., polybutadiene, copolymers of butadiene and styrene, isoprene and/or acrylonitrile, wherein the butadiene content is higher than 40% by moles, and acrylic rubbers.

Examples of vinyl monomers which may be grafted onto the elastomeric core are acrylic acid derivatives and methacrylic acid derivatives, vinyl-aromatic compounds, unsaturated nitrile compounds and polyfunctional derivatives, either individually or in admixture with each other. Specific examples of these grafting vinyl monomers comprise methacrylic acid C₁-C₁₆ alkyl esters, preferably methyl methacrylate; esters of methacrylic acid with polyfunctional alcohols such as 1,3-butylene glycol dimethacrylate and trimethylolpropane trimethacrylate; allyl methacrylate and/or diallyl methacrylate; vinyl-aromatic compounds such as styrene, vinyl toluene, alpha-methyl styrene, halogenated (e.g. chlorinated) styrene, vinyl naphthalene and divinyl benzene, styrene being particularly preferred; unsaturated nitriles such as acrylonitrile, methacrylonitrile and alpha-halogenated (e.g. chlorinated) acrylonitriles, acrylonitrile being particularly preferred; maleic acid and maleic anhydride.

These vinyl monomers can be used individually or in combination of two or more thereof.

Preferably, the elastomeric core of the graft copolymer (E) has a second order glass transition temperature below -10°C and particularly even below -50°C and, usually, a cross-linking degree higher than 50% and up to 99% by weight (gel content), determined by extraction (e.g. with n-hexane).

The graft copolymer (E) preferably has an elastomer content higher than 35 and up to 95% by weight.

These copolymers can be prepared by means of any known method such as bulk polymerization, suspension polymerization, bulk-suspension polymerization, solution polymerization or emulsion polymerization.

A typical example of graft polymer (E) which can be employed is a three-step polymer having a rubber-like core based on butadiene, an inner shell of polymerized styrene and an outer shell of polymerized methyl methacrylate and 1,3-butylene glycol dimethacrylate.

The graft copolymer (E) is well known on the market and is available from a large number of manufacturers such as, for example, from Rohm and Haas Company, Philadelphia, USA, under the trade-name PARALOID® EXL 2600, EXL 2300, EXL 3600 and EXL 3300 or from Kanega, Belgium, under the trade-name KaneAce® M 511, etc.

Examples of preferred thermoplastic compositions are those comprising a blend of from 20 to 60% by weight of (A.1) or (A.2) and from 80 to 40% by weight of an aromatic polycarbonate, and, with respect to 100 parts by weight of this blend, from 0.1 to 1 part by weight of a bis(alkyl-phenyl) diphosphite (D), from 0.5 to 2 parts by weight of the synergistic mixture (C) and from 0 to 15 parts by weight of graft copolymer (E).

The compositions of the present invention may be prepared by any known conventional mixing method.

Generally, the mixing is carried out in the molten state, after a premixing at room temperature, in known mixing units such as single-screw or double-screw extruders, Banbury mixers, mixing rolls, usually at a temperature of from 180 to 300°C.

The compositions may further contain other additives intimately incorporated therein, such as plasticizers, lubricants, fireproofing agents, antistatic agents, dyes, pigments, and glass fibres or other inorganic fillers, in order to impart particular characteristics to the material.

The compositions of the present invention are easy to process and exhibit a combination of properties which make them suitable for producing articles endowed with a high tenacity along with a high impact strength. The preferred fields of use of said compositions are, therefore, the sectors of electric household appliances and of electronic and technical articles in general. Said compositions may be formed into films, sheets, strips, bands, rods, boxes, pans and containers. They can also be used to produce foamed articles by means of conventional techniques.

The following examples are to further illustrate the present invention.

In said examples, all parts and percentages are expressed by weight, unless otherwise indicated.

In the examples the following methods were used for measuring the characteristics of the compositions of the present invention.

### Mechanical properties

The IZOD resiliences with notch at 23°C and at -30°C, according to ASTM D 256, on test pieces having a thickness of 3.2 mm, and the elongation at break in tensile stress tests, according to ASTM D 638, were determined.

### Thermal properties

The VICAT B softening temperature (5 kg in oil) was determined according to ISO 306, with a temperature increase of 120°C/ hour.

### Rheological properties

The melt index (M.F.I.) was determined according to ASTM D 1238, at 260°C and 5 kg.

### Release force

The force required for removing, at a temperature of the mould of 50 to 60°C, a box (220 x 110 x 70 mm, thickness 2 mm) from the mould assembled on a NEGRI & BOSSI press was determined by using a pressure transducer inserted into the oleodynamic circuit of the ejector and by recording the value on an oscilloscope (mod. HP 54201 D).

### EXAMPLES 1 TO 4

In a rotating drum mixer, the following components were blended, at room temperature:
- 29.5 parts by weight of an impact resistant vinyl-aromatic copolymer of 68.5% by weight of styrene, 9.5% by weight of polybutadiene rubber and 22% by weight of acrylonitrile;
- 8.6 parts by weight of PARALOID® EXL 2600 rubber consisting of 60% by weight of a polybutadiene rubber core onto which chains of styrene-methyl methacrylate copolymer (ratio 1:1) in an amount of 40% by weight had been grafted;
- 70.5 parts by weight of aromatic polycarbonate (SINVET®, produced and sold by ENIMONT S.p.A.) and
- a release agent of the type and in the amounts reported in the following Table I.

The mixture thus obtained was dried at 100°C for 4 hours and extruded with a single-screw extruder (BANDERA TR 45) with a length/diameter ratio of 25, under degassing, at a temperature of 260°C.

By cutting the strands leaving the extruder, granules were obtained, which were dried for 4 hours at 100°C.

In order to evaluate the characteristics, the granules were injection molded at a temperature of 260 to 270°C in a NEGRI & BOSSI V 17-110 FA press to obtain test pieces having the dimensions required by the various standards.

The properties measured on the test pieces thus obtained are listed in the following Table I.

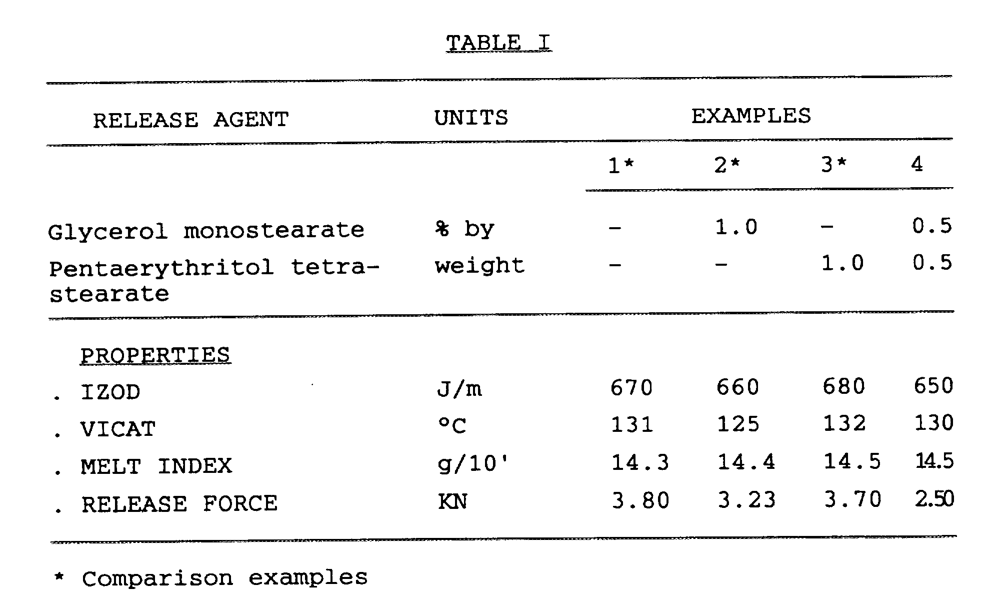

### EXAMPLE 5

The procedure of example 1 was repeated for preparing a composition comprising:
- 40.2 parts by weight of a vinyl-aromatic copolymer of 65% by weight of styrene, 11% by weight of polybutadiene rubber and 24% by weight of acrylonitrile, prepared by bulk polymerization in the presence of Trigonox® 25 B 50 (AKZO) as initiator;
- 59.8 parts by weight of an aromatic polycarbonate (SINVET® produced and sold by ENIMONT S.p.A.);
- 8.6 parts by weight of rubber (PARALOID® EXL 2600) of example 1;
- 1 part by weight of a mixture of glycerol monostearate and pentaerythritol tetrastearate (weight ratio 1:1).

The mechanical, thermal and rheological properties and the release force, measured according to the methods described in example 1, were:

| | |
|---|---|
| IZOD : | 580 J/m |
| VICAT : | 121°C |
| Melt Index : | 16 g/10' |
| Release force : | 2.3 KN |

### EXAMPLES 6 TO 10

In a rotating drum mixer, the following components were blended at room temperature:
- an impact resistant vinyl-aromatic copolymer (A) consisting of 67.5% by weight of styrene, 10.5% by weight of polybutadienic rubber and 22% by weight of acrylonitrile, in the amounts listed in the following Table II;
- aromatic polycarbonate (SINVET ® produced and sold by ENICHEM) in the amounts listed in the following Table II;
- a release agent (C) of the type and in the amounts reported in the following Table II;
- bis-(2,4-di-tert-butyl-phenyl)-pentaerythritol-diphosphite (ULTRANOX® 626) (D), in the amounts listed in the following Table II;
- rubber PARALOID ® EXL 2600 (E), consisting of 60% by weight of a polybutadiene rubber core onto which chains of styrene-methyl methacrylate copolymer (ratio 1:1) in an amount of 40% by weight had been grafted, in the amounts listed in the following Table II.

The thus obtained mixture was dried at 100°C for 4 hours and extruded by a single-screw extruder (BANDERA TR 45) with a length/diameter ratio of 25, under degassing, at a temperature of 260°C.

By cutting the strands leaving the extruder granules were obtained, which were dried for 4 hours at 100°C.

In order to evaluate the characteristics, one portion of the granules was injection molded at a temperature of 260 to 270°C in a NEGRI & BOSSI V 17-110 FA press to obtain test pieces having the dimensions required by the various standards. Another portion of the granules was injection molded at a temperature of 300 to 310°C in the same NEGRI & BOSSI V 17-110 FA press.

The properties measured on the test pieces thus obtained are listed in the following Table III.

**TABLE II**

| COMPOSITION | | EXAMPLES | | | | |
|---|---|---|---|---|---|---|
| | | 6 | 7 | 8 | 9 | 10 |
| A) Vinyl-aromatic copolymer | Parts by weight | 32 | 32 | 42 | 42 | 30 |
| B) SINVET® | | 68 | 68 | 58 | 58 | 70 |
| C) Releasing agent | | | | | | |
| .Glycerol monostearate | | 0.4 | 0.4 | 0.4 | 0.4 | 0.4 |
| .Pentaerythritol tetra=stearate | | 0.6 | 0.6 | 0.6 | 0.6 | 0.6 |
| D) ULTRANOX®626 | | - | 0.3 | - | 0.3 | 0.3 |
| E) PARALOID® EXL 2600 | | 5.5 | 5.5 | 5.5 | 5.5 | - |

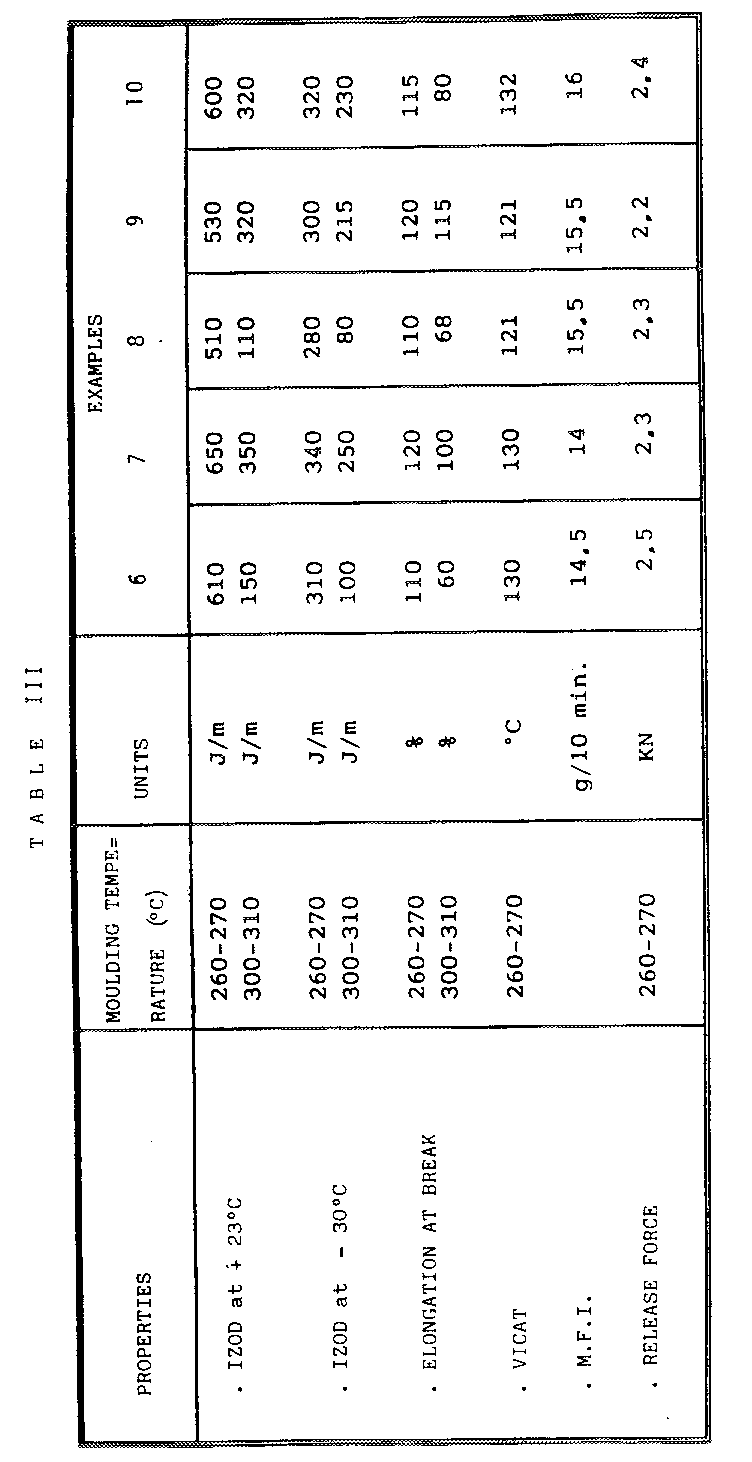

## Claims

1. Thermoplastic compositions with improved mould release characteristics, comprising:
(A) impact resistant vinyl-aromatic copolymer containing ethylenically unsaturated nitrile, vinyl aromatic monomer and rubber;
(B) engineering polymer;
(C) a release agent composed of a mixture comprising:
(i) at least one glycerol ester of a C₁₆-C₁₈ fatty acid and
(ii) at least one ester of a saturated, aliphatic, monocarboxylic acid containing from 10 to 20 carbon atoms, or a mixture of said monocarboxylic acid and a polycarboxylic acid containing from 10 to 20 carbon atoms, with an aliphatic alcohol containing from 4 to 6 hydroxy groups;
(D) from 0 to 3 parts by weight, per 100 parts by weight of components (A) + (B), of bis(alkyl-phenyl)pentaerythritol diphosphite, and, optionally,
(E) a graft copolymer comprising an elastomeric core having a second order glass transition temperature below 10°C with vinyl monomer chains grafted thereon.

2. Compositions according to claim 1, wherein the weight ratio of esters (i) and (ii) of mixture (C) ranges from 4:1 to 1:4 and preferably is 1:1.

3. Compositions according to any one of claims 1 and 2, wherein ester (i) comprises a biodegradable product of non-ionic, polar nature having the following properties:
- Saponification number 155 - 175
- Iodine number 1 - 2
- Monoester content 40 - 99% by weight
- Melting point 55 - 65°C
- Free glycerol 1 - 6% by weight
- Water content 0.1 - 0.5% by weight.

4. Compositions according to any one of the preceding claims, wherein the alcohol component of ester (ii) is selected from:
(1) tetrahydric alcohols having from 4 to 16, preferably from 4 to 8 carbon atoms;
(2) pentahydric alcohols having from 5 to 18, preferably from 5 to 10 carbon atoms;
(3) hexahydric alcohols having from 6 to 18, preferably from 6 to 12 carbon atoms; and
(4) mixtures of the above alcohols.

5. Compositions according to any one of the preceding claims, wherein the ester (ii) is obtainable by complete esterification of the 4 to 6 OH groups of the alcohol(s) with one or more of the C₁₀-C₂₀ carboxylic acids.

6. Compositions according to any one of the preceding claims, wherein the C₁₀-C₂₀ carboxylic acid is selected from stearic acid and palmitic acid and mixtures thereof.

7. Compositions according to any one of the preceding claims, wherein the amount of component (C) ranges from 0.01 to 3 parts by weight, preferably from 0.5 to 2 parts by weight, per 100 parts by weight of components (A)+(B).

8. Compositions according to any one of the preceding claims, wherein the bis(alkyl-phenyl)pentaerythritol diphosphites are of general formula (I): 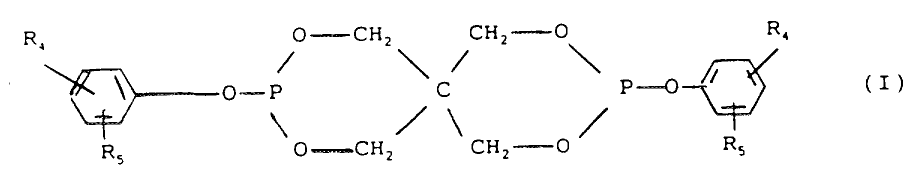 wherein R₄ and R₅, the same or different from each other, are C₁-C₁₀ alkyl groups, R₄ being preferably tert-butyl in ortho-position and/or R₅ being preferably a C₁-C₆ alkyl group.

9. Compositions according to any one of claims 1 to 8, wherein the bis(alkyl-phenyl)pentaerythritol diphosphite comprises bis(2,4-di-tert-butyl-phenyl)-pentaerythritol diphosphite.

10. Compositions according to any one of the preceding claims, wherein the amount of component (D) ranges from 0.01 to 3 and particularly from 0.05 to 1 parts by weight per 100 parts by weight of (A) + (B).

11. Compositions according to any one of the preceding claims, wherein component (A) is selected from:
- an impact resistant vinyl-aromatic copolymer (A.1) containing from 2 to 35% by weight of ethylenically unsaturated nitrile, preferably up to 20 and particularly of from 2 to 15% by weight of dienic rubber, and preferably up to about 65% by weight of vinyl-aromatic monomer;
- an impact resistant styrene copolymer (A.2) containing from 2 to 35% by weight of ethylenically unsaturated nitrile, from 5 to 50, preferably from 15 to 30% by weight of olefinic elastomer; and from 93 to 15, preferably from 83 to 35% by weight of vinyl-aromatic monomer, preferably styrene; the sum of these monomers being equal to 100; and
- mixtures of said copolymers.

12. Compositions according to any one of the preceding claims, wherein the ethylenically unsaturated nitrile comprises acrylonitrile.

13. Compositions according to any one of the preceding claims, wherein the vinyl-aromatic monomer comprises styrene.

14. Compositions according to any one of claims 11 to 13, wherein the dienic rubber comprises polybutadiene and the olefinic elastomer comprises ethylene-propylene-non-conjugated diene rubber terpolymer having a Mooney viscosity (ML-4) at 100°C of from 10 to 150, preferably from 30 to 90, and an iodine number higher than 5, preferably of from 10 to 40.

15. Compositions according to any one of the preceding claims, wherein the engineering polymer (B) comprises polycarbonate, particularly aromatic polycarbonate.

16. Compositions according to any one of the preceding claims, wherein, based on the total of components (A) and (B), component (A) accounts for 10 to 90, preferably 20 to 80% by weight.

17. Compositions according to any one of the preceding claims, wherein the amount of component (E) ranges from 0 to 30, preferably 2 to 15 parts by weight per 100 parts by weight of (A) + (B).

18. Compositions according to any one of the preceding claims, wherein the graft copolymer (E) comprises from 25 to 95% by weight of elastomeric core and from 75 to 5% by weight of vinyl monomer chains grafted thereon.

19. Compositions according to any one of claims 1 to 18, wherein the core of component (E) is selected from polybutadiene, copolymers of butadiene, styrene, isoprene and/or acrylonitrile in which the butadiene content is at least 40% by moles, acrylic rubbers and mixtures thereof.

20. Compositions according to any one of the preceding claims, wherein the vinyl monomers grafted onto the core of component (E) are selected from derivatives of acrylic acid, derivatives of methacrylic acid, vinyl-aromatic compounds, unsaturated nitriles, polyfunctional derivatives and mixtures thereof.

21. Compositions according to any one of the preceding claims, comprising a blend of from 20 to 60% by weight of component (A), preferably component (A.1) and/or (A.2), and from 80 to 40% by weight of component (B), preferably aromatic polycarbonate, and, per 100 parts by weight of (A) + (B), from 0.1 to 1 part by weight of component (D), from 0.5 to 2 parts by weight of component (C) and from 0 to 15 parts by weight of component (E).

22. Moulded articles, obtainable form the compositions according to any one of the preceding claims.

## Patentansprüche

1. Thermoplastische Zusammensetzungen mit verbesserten Formtrenneigenschaften, umfassend:
(A) schlagzähes vinylaromatisches Copolymer, das ethylenisch ungesättigtes Nitril, vinylaromatisches Monomer und Kautschuk enthält,
(B) Technopolymer;
(C) ein Trennmittel, das aus einer Mischung zusammengesetzt ist, welche umfaßt:
(i) mindestens einen Glycerinester einer C₁₆-C₁₈-Fettsäure und
(ii) mindestens einen Ester einer gesättigten aliphatischen Monocarbonsäure, die 10 bis 20 Kohlenstoffatome enthält, oder eine Mischung dieser Monocarbonsäure und einer 10 bis 20 Kohlenstoffatomen enthaltenden Polycarbonsäure mit einem 4 bis 6 Hydroxygruppen enthaltenden aliphatischen Alkohol;
(D) 0 bis 3 Gewichtsteile, pro 100 Gewichtsteile der Komponenten (A) + (B), Bis(alkylphenyl)pentaerythritdiphosphit und, gegebenenfalls,
(E) ein Pfropf-Copolymer, welches einen elastomeren Kern mit einer Glasübergangstemperatur zweiter Ordnung unter 10°C, auf den Vinylmonomer-Ketten gepfropft sind, umfaßt.

2. Zusammensetzungen nach Anspruch 1, in denen das Gewichtsverhältnis der Ester (i) und (ii) der Mischung (C) im Bereich von 4:1 bis 1:4 liegt und vorzugsweise 1:1 beträgt.

3. Zusammensetzungen nach irgendeinem der Ansprüche 1 und 2, in welchem der Ester (i) ein biologisch abbaubares Produkt von nicht-ionischer, polarer Natur mit den folgenden Eigenschaften umfaßt:
- Verseifungszahl 155 - 175
- Iodzahl 1 - 2
- Monoester-Gehalt 40 - 99 Gewichts-%
- Schmelzpunkt 55 - 65°C
- Freies Glycerin 1 - 6 Gewichts-%
- Wassergehalt 0,1 - 0,5 Gewichts-%

4. Zusammensetzungen nach irgendeinem der vorangehenden Ansprüche, in denen die Alkohol-Komponente von Ester (ii) ausgewählt ist aus:
(1) vierwertigen Alkoholen mit 4 bis 16, vorzugsweise 4 bis 8 Kohlenstoffatomen;
(2) fünfwertigen Alkoholen mit 5 bis 18, vorzugsweise 5 bis 10 Kohlenstoffatomen;
(3) sechswertigen Alkoholen mit 6 bis 18, vorzugsweise 6 bis 12 Kohlenstoffatomen; und
(4) Mischungen der obigen Alkohole.

5. Zusammensetzungen nach irgendeinem der vorangehenden Ansprüche, in denen der Ester (ii) erhältlich ist durch vollständige Veresterung der 4 bis 6 OH-Gruppen des Alkohols bzw. der Alkohole mit einer oder mehreren C₁₀-C₂₀-Carbonsäuren.

6. Zusammensetzungen nach irgendeinem der vorangehenden Ansprüche, in denen die C₁₀-C₂₀-Carbonsäure aus Stearinsäure und Palmitinsäure und Mischungen davon ausgewählt ist.

7. Zusammensetzungen nach irgendeinem der vorangehenden Ansprüche, in denen die Menge an Komponente (C) im Bereich von 0,01 bis 3 Gewichtsteilen, vorzugsweise 0,5 bis 2 Gewichtsteilen, pro 100 Gewichtsteile der Komponenten (A) + (B) liegt.

8. Zusammensetzungen nach irgendeinem der vorangehenden Ansprüche, in welchen die Bis (alkylphenyl)pentaerythritdiphosphite die allgemeine Formel (I) aufweisen: 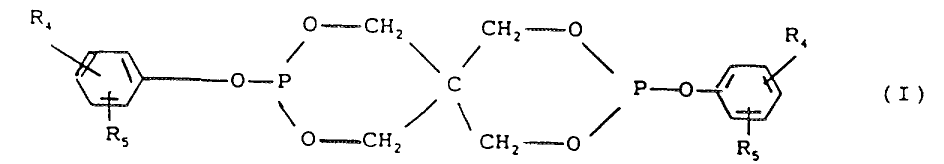 worin R₄ und R₅, gleich oder verschieden voneinander, C₁-C₁₀-Alkylgruppen darstellen, wobei R₄ vorzugsweise tert-Butyl in ortho-Stellung und/oder R₅ vorzugsweise eine C₁-C₆-Alkylgruppe ist.

9. Zusammensetzungen nach irgendeinem der Ansprüche 1 bis 8, in welchen das Bis (alkylphenyl)pentaerythritdiphosphit Bis(2,4-di-tert-butylphenyl)pentaerythritdiphosphit umfaßt.

10. Zusammensetzungen nach irgendeinem der vorangehenden Ansprüche, in welchen die Menge an Komponente (D) im Bereich von 0,01 bis 3 und insbesondere von 0,05 bis 1 Gewichtsteil pro 100 Gewichtsteile von (A) + (B) liegt.

11. Zusammensetzungen nach irgendeinem der vorangehenden Ansprüche, in welchen die Komponente (A) ausgewählt ist aus:
- einem schlagzähen vinylaromatischen Copolymer (A.1), das 2 bis 35 Gewichts-% ethylenisch ungesättigtes Nitril, vorzugsweise bis zu 20 und insbesondere 2 bis 15 Gewichts-% Dien-Kautschuk und vorzugsweise bis zu etwa 65 Gewichts-% vinylaromatisches Monomer enthält;
- einem schlagzähen Styrol-Copolymer (A.2), das 2 bis 35 Gewichts-% ethylenisch ungesättigtes Nitril, 5 bis 50, vorzugsweise 15 bis 30 Gewichts-% olefinisches Elastomer; und 93 bis 15, vorzugsweise 83 bis 35 Gewichts-% vinylaromatisches Monomer, vorzugsweise Styrol, enthält; wobei die Summe dieser Monomeren gleich 100 ist; und
- Mischungen von derartigen Copolymeren.

12. Zusammensetzungen nach irgendeinem der vorangehenden Ansprüche, in welchen das ethylenisch ungesättigte Nitril Acrylnitril umfaßt.

13. Zusammensetzungen nach irgendeinem der vorangehenden Ansprüche, in welchen das vinylaromatische Monomer Styrol umfaßt.

14. Zusammensetzungen nach irgendeinem der Ansprüche 11 bis 13, in denen der Dien-Kautschuk Polybutadien umfaßt und das olefinische Elastomer Ethylen-Propylen-nichtkonjugiertes Dien-Kautschuk-Terpolymer mit einer Mooney-Viskosität (ML-4) bei 100°C von 10 bis 150, vorzugsweise 30 bis 90, und einer Iodzahl größer als 5, vorzugsweise von 10 bis 40, umfaßt.

15. Zusammensetzungen nach irgendeinem der vorangehenden Ansprüche, in denen das Technopolymer (B) Polycarbonat, insbesondere aromatisches Polycarbonat, umfaßt.

16. Zusammensetzungen nach irgendeinem der vorangehenden Ansprüche, in denen, bezogen auf die Komponenten (A) und (B) zusammen, die Komponente (A) 10 bis 90, vorzugsweise 20 bis 80 Gewichts-% ausmacht.

17. Zusammensetzungen nach irgendeinem der vorangehenden Ansprüche, in denen die Menge an Komponente (E) im Bereich von 0 bis 30, vorzugsweise 2 bis 15 Gewichtsteilen pro 100 Gewichtsteile von (A) + (B) liegt.

18. Zusammensetzungen nach irgendeinem der vorangehenden Ansprüche, in denen das Pfropf-Copolymer (E) 25 bis 95 Gewichts-% elastomeren Kern und 75 bis 5 Gewichts-% darauf gepfropfte Vinylmonomer-Ketten umfaßt.

19. Zusammensetzungen nach irgendeinem der Ansprüche 1 bis 18, in denen der Kern von Komponente (E) ausgewählt ist aus Polybutadien, Copolymeren von Butadien, Styrol, Isopren und/oder Acrylnitril, in denen der Butadien-Gehalt mindestens 40 Mol-% beträgt, acrylischen Kautschuken und Mischungen davon.

20. Zusammensetzungen nach irgendeinem der vorangehenden Ansprüche, in denen die auf den Kern aus Komponente (E) gepfropften Vinylmonomere ausgewählt sind aus Derivaten von Acrylsäure, Derivaten von Methacrylsäure, vinylaromatischen Verbindungen, ungesättigten Nitrilen, polyfunktionellen Derivaten und Mischungen davon.

21. Zusammensetzungen nach irgendeinem der vorangehenden Ansprüche, umfassend eine Mischung von 20 bis 60 Gewichts-% Komponente (A), vorzugsweise Komponente (A.1) und/oder (A.2), und 80 bis 40 Gewichts-% Komponente (B), vorzugsweise aromatischem Polycarbonat, und, pro 100 Gewichtsteile von (A) + (B), 0,1 bis 1 Gewichtsteil Komponente (D), 0,5 bis 2 Gewichtsteile Komponente (C) und 0 bis 15 Gewichtsteile Komponente (E).

22. Formkörper, erhältlich aus den Zusammensetzungen gemäß irgendeinem der vorangehenden Ansprüche.

## Revendications

1. Compositions thermoplastiques présentant des caractéristiques de démoulage améliorées et comportant :
A) un copolymère de composé vinyl-aromatique, résistant aux chocs, comportant un nitrile à insaturation éthylénique, un monomère vinyl-aromatique et un caoutchouc,
B) un polymère technique,
C) un agent de démoulage constitué par un mélange comprenant :
i) au moins un ester de glycérol et d'un acide gras en C₁₆-C₁₈ et
ii) au moins un ester d'un acide monocarboxylique aliphatique saturé comportant de 10 à 20 atomes de carbone, ou d'un mélange d'un tel acide monocarboxylique et d'un acide polycarboxylique comportant de 10 à 20 atomes de carbone, et d'un alcool aliphatique comportant de 4 à 6 groupes hydroxy,
D) de 0 à 3 parties en poids, pour 100 parties en poids des composants (A) + (B), d'un diphosphite de bis(alkyl-phényle) et de pentaérythritol,
et, éventuellement,
E) un copolymère de greffage, comportant un noyau d'élastomère qui présente une température de transition vitreuse du second ordre inférieure à 10°C et qui porte, greffées sur lui, des chaînes de monomère vinylique.

2. Compositions conformes à la revendication 1, dans lesquelles le rapport pondéral des esters (i) et (ii) du mélange (C) vaut de 4/1 à 1/4, et de préférence 1/1.

3. Compositions conformes à l'une des revendications 1 et 2, dans lesquelles l'ester (i) est un produit biodégradable, de nature non-ionique et polaire, qui possède les propriétés suivantes :
- indice de saponification : 155-175
- indice d'iode : 1-2
- teneur en monoester : 40-99 % en poids
- point de fusion : 55-65°C
- teneur en glycérol libre : 1-6 % en poids
- teneur en eau : 0,1-0,5 % en poids

4. Compositions conformes à l'une des revendications précédentes, dans lesquelles l'alcool constituant l'ester (ii) est choisi parmi :
1) les tétrols comportant de 4 à 16, et de préférence de 4 à 8 atomes de carbone ;
2) les pentols comportant de 5 à 18, et de préférence de 5 à 10 atomes de carbone ;
3) les hexols comportant de 6 à 18, et de préférence de 6 à 12 atomes de carbone ; et
4) les mélanges des alcools mentionnés ci-dessus.

5. Compositions conformes à l'une des revendications précédentes, dans lesquelles l'ester (ii) peut être obtenu par estérification complète des 4 à 6 groupes OH de l'alcool ou des alcools, réalisée au moyen d'un ou de plusieurs acides carboxyliques en C₁₀-C₂₀.

6. Compositions conformes à l'une des revendications précédentes, dans lesquelles l'acide carboxylique en C₁₀-C₂₀ est choisi parmi l'acide stéarique, l'acide palmitique et leurs mélanges.

7. Compositions conformes à l'une des revendications précédentes, dans lesquelles la quantité du composant (C) vaut de 0,01 à 3 parties en poids, et de préférence de 0,5 à 2 parties en poids, pour 100 parties en poids des composants (A) + (B).

8. Compositions conformes à l'une des revendications précédentes, dans lesquelles les diphosphites de bis(alkyl-phényle) et de pentaérythritol correspondent à la formule générale (I): 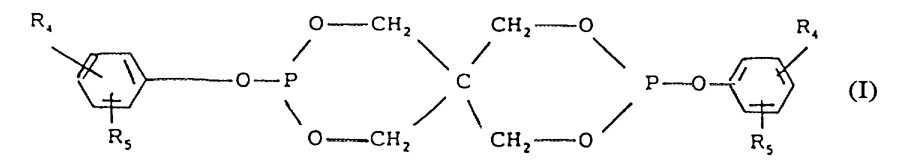 dans laquelle R₄ et R₅, qui peuvent être identiques ou différents l'un de l'autre, représentent des groupes alkyle en C₁-C₁₀, et de préférence, R₄ représente un groupe tertiobutyle placé en position ortho et/ou R₅ représente un groupe alkyle en C₁-C₆.

9. Compositions conformes à l'une des revendications 1 à 8, dans lesquelles le diphosphite de bis(alkyl-phényle) et de pentaérythritol est du diphosphite de bis(2,4-di-t-butyl-phényle) et de pentaérythritol.

10. Compositions conformes à l'une des revendications précédentes, dans lesquelles la quantité du composant (D) vaut de 0,01 à 3 parties en poids, et en particulier de 0,05 à 1 parties en poids, pour 100 parties en poids des composants (A) + (B).

11. Compositions conformes à l'une des revendications précédentes, dans lesquelles le composant (A) est choisi parmi :
- un copolymère (A.1) de composé vinyl-aromatique, résistant aux chocs, comportant de 2 à 35 % en poids d'un nitrile à insaturation éthylénique, de préférence jusqu'à 20 % et en particulier de 2 à 15 % en poids d'un caoutchouc de diène, et de préférence jusqu'environ 65 % en poids d'un monomère vinyl-aromatique,
- un copolymère (A.2) du styrène, résistant aux chocs, comportant de 2 à 35 % en poids d'un nitrile à insaturation éthylénique, de 5 à 50 % et de préférence de 15 à 30 % en poids d'un élastomère d'oléfines, et de 93 à 15 % et de préférence de 83 à 35 % en poids d'un monomère vinyl-aromatique, qui est de préférence du styrène, le total de ces monomères représentant 100 %,
- et les mélanges de tels copolymères.

12. Compositions conformes à l'une des revendications précédentes, dans lesquelles le nitrile à insaturation éthylénique est de l'acrylonitrile.

13. Compositions conformes à l'une des revendications précédentes, dans lesquelles le monomère vinyl-aromatique est du styrène.

14. Compositions conformes à l'une des revendications 11 à 13, dans lesquelles le caoutchouc de diène est un polybutadiène et l'élastomère d'oléfines est un caoutchouc terpolymère éthylène/propylène/diène non-conjugué dont la viscosité Mooney (ML-4) à 100°C vaut de 10 à 150 et de préférence de 30 à 90, et dont l'indice d'iode est supérieur à 5 et vaut de préférence de 10 à 40.

15. Compositions conformes à l'une des revendications précédentes, dans lesquelles le polymère technique (B) est un polycarbonate, en particulier un polycarbonate aromatique.

16. Compositions conformes à l'une des revendications précédentes, dans lesquelles le composant (A) représente de 10 à 90 %, et de préférence de 20 à 80 % en poids, du total des composants (A) et (B).

17. Compositions conformes à l'une des revendications précédentes, dans lesquelles la quantité de composant (E) vaut de 0 à 30 et de préférence de 2 à 15 parties en poids pour 100 parties en poids des composants (A) + (B).

18. Compositions conformes à l'une des revendications précédentes, dans lesquelles le copolymère de greffage (E) est constitué de 25 à 95 % en poids d'un noyau d'élastomère et de 75 à 5 % en poids de chaînes de monomère vinylique greffées dessus.

19. Compositions conformes à l'une des revendications 1 à 18, dans lesquelles le matériau du noyau du composant (E) est choisi parmi les polybutadiènes, les copolymères de butadiène, styrène, isoprène et/ou acrylonitrile contenant au moins 40 % en moles de butadiène, les caoutchoucs acryliques, et leurs mélanges.

20. Compositions conformes à l'une des revendications précédentes, dans lesquelles les monomères vinyliques greffés sur le noyau du composant (E) sont choisis parmi les dérivés de l'acide acrylique, les dérivés de l'acide méthacrylique, les composés vinyl-aromatiques, les nitriles insaturés, les dérivés polyfonctionnels et les mélanges de tels composés.

21. Compositions conformes à l'une des revendications précédentes, comprenant un mélange de 20 à 60 % en poids de composant (A), qui est de préférence (A.1) et/ou (A.2), et de 80 à 40 % en poids de composant (B), qui est de préférence un polycarbonate aromatique, ainsi que, pour 100 parties en poids de (A) + (B), de 0,1 à 1 partie en poids de composant (D), de 0,5 à 2 parties en poids de composant (C) et de 0 à 15 parties en poids de composant (E).

22. Articles moulés, que l'on peut obtenir à partir des compositions conformes à l'une des revendications précédentes.
